# EUROPÄISCHE PATENTSCHRIFT

(11) **EP 4 418 056 B1**
(45) Veröffentlichungstag und Bekanntmachung des Hinweises auf die Patenterteilung: **03.09.2025**
(21) Anmeldenummer: 23217051.4
(22) Anmeldetag: 15.12.2023
(51) Int. Cl.: G05B 19/042

(54) **BEDIENEINHEIT UND VERFAHREN ZUM BEDIENEN EINER ANLAGE MIT EINER BEDIENEINHEIT**
OPERATING UNIT AND METHOD FOR OPERATING A SYSTEM WITH AN OPERATING UNIT
UNITÉ DE COMMANDE ET PROCÉDÉ DE COMMANDE D'UNE INSTALLATION DOTÉE D'UNE UNITÉ DE COMMANDE

(30) Priorität: 17.02.2023 LU 503513
(43) Veröffentlichungstag der Anmeldung: 21.08.2024
(73) Patentinhaber: ACD Antriebstechnik GmbH, 88480 Achstetten (DE)
(72) Erfinder: Fesseler, Aaron, 88480 Achstetten (DE)
(74) Vertreter: Sonnenberg Harrison Partnerschaft mbB

(56) Entgegenhaltungen:
- WO-A1-2017/139817
- WO-A1-2022/258575

## Beschreibung

Diese Anmeldung beansprucht die Priorität der luxemburgischen Patentanmeldung LU 503 513, eingereicht am 17. Februar 2023.

### GEBIET DER ERFINDUNG

Das Gebiet der Erfindung betrifft im Allgemeinen Sicherheitstechnik im Maschinenbau und im Speziellen Signal- beziehungsweise Meldeleuchten an einer Bedieneinheit (Human-Machine-Interface).

### HINTERGRUND DER OFFENBARUNG

Von Anlagen und (Elektro-)Maschinen können Risiken ausgehen, die so bedrohlich sind, dass ihnen Menschen und Umwelt unter keinen Umständen ausgesetzt werden dürfen. Ist eine solche Gefährdung gegeben, müssen die vorhandenen Risiken reduziert werden, um dem Sicherheitsbedürfnis Rechnung zu tragen. Um die Risikoreduzierung quantifizierbar zu machen, können zwei Größen, der Safety Integrity Level (SIL) und der Performance Level (PL), herangezogen werden.

Der SIL ist in der internationalen Normung gemäß IEC 61508/IEC61511 normiert und beschreibt einen Wert für die Wahrscheinlichkeit, dass eine sicherheitsbezogene Funktion die geforderten Sicherheitsfunktionen unter allen angegebenen Bedingungen innerhalb einer bestimmten Zeitdauer zufriedenstellend erfüllt. Der SIL umfasst drei diskrete Stufen von SIL 1 - niedrigste Risikoreduzierung bis SIL 3 - höchste Risikoreduzierung.

Der PL ist ein Wert, der die Fähigkeit sicherheitsbezogener Teile von Steuerungen beschreibt, welche unter angegebenen Bedingungen eine Sicherheitsfunktion ausführen. Der PL reicht dabei von PL a - niedrigste Risikoreduzierung bis PL e - höchste Risikoreduzierung.

Der Zusammenhang zwischen SIL und PL ist in der Norm ISO 13849-1:2006 beschrieben. Es gilt, je höher der SIL beziehungsweise der PL eines sicherheitsbezogenen Systems, umso geringer ist die Wahrscheinlichkeit, dass das System die geforderte Sicherheitsfunktion nicht ausführt.

Um einen höheren SIL-Wert beziehungsweise PL-Wert und somit ein höheres Sicherheitsniveau zu erreichen, werden im Anlagen- beziehungsweise Maschinebau häufig sogenannte Signal- beziehungsweise Meldeleuchten eingesetzt. Solche Leuchten zeigen gut sichtbar, einen Funktions- beziehungsweise Gefahrenzustand durch unterschiedliche Arten von Leuchten in entsprechenden Farben oder Farbkombinationen.

Für solche Leuchten und deren Anwendungen existieren entsprechende Normen, in welchen das Aussehen und Funktionen mit Bedeutung von Farben festgelegt werden, wie beispielsweise die Normen EN 60073. Die EN 60073 ist eine europäische Norm für die Klassifizierung von Elektromaschinen, welche die Anforderungen an die Bauform, die Schutzklasse und die Isolationsklasse von elektrischen Anlagen festlegt.

Hierzu werden die Meldeleuchten überwacht, wodurch ein hoher Sicherheitsstandard - hoher SIL beziehungsweise PL - erreicht werden und so das Risiko für Leib und Leben reduziert werden soll. Ein höchster Sicherheitsstandard bedeutet beispielsweise, dass höchstens ein Fehler ohne Funktionseinschränkung auftreten darf und dieser Fehler sicher, das heißt zu 100 Prozent, vom sicherheitsbezogenen System erkannt wird. Die Auslegung solcher sicherheitsbezogener Systeme beinhaltet eine Risikoanalyse, mit welcher Mehrkanaligkeit, Dynamisierung, Redundanzgrad, und so weiter festgelegt werden. Dadurch soll das sicherheitsbezogene System in der Lage sein, auf unvorhergesehene Situationen oder Störungen zu reagieren, ohne die Sicherheit und Zuverlässigkeit des Systems zu gefährden.

Die Leuchten können fest an der Maschine montiert sein, oder auch mobil via wired beziehungsweise drahtgebunden oder wireless beziehungsweise drahtlos aufgestellt sein.

Die Meldeleuchte zeigt Funktionen und Gefahren optisch an, wodurch ihnen eine in Bezeug auf Sicherheitstechnik besondere Bedeutung zukommt. Die Meldeleuchten weisen auf potenzielle Gefahren hin, welche zu Verletzungen bis hin zum Tod führen können. Ein nicht zuverlässiges Leuchten kann bei entsprechender Gefahr bis hin zu tödlichen Unfällen führen. Daher muss ein sicheres Leuchten beziehungsweise sicheres Nicht-Leuchten mit entsprechender/entsprechenden Farbe(n) und Mustern, wie beispielsweise Blinken oder Pulsieren, unbedingt gewährleistet sein, um in jedem Fall die Sicherheit für Körper und Leben zu garantieren.

Aus DE 20 2020 105 750 U1 ist eine Warnleuchtsäule zur optischen Anzeige von wenigstens einem Betriebszustand bekannt.

EP 1 233 316 A2 offenbart eine Vorrichtung zum Bedienen von Automatisierungskomponenten. bei welcher verfügbare IT-Geräte, wie beispielsweise PDAs oder Mobilfunktelefone, als Einfach-HMI (Human-Machine-Interface) verwendet werden, um die Bedienung komfortabler zu gestalten.

DE 10 2013 220 865 A1 offenbart ein Verfahren und System zum Fernbedienen einer Werkzeugmaschine via eines mobilen Kommunikationsgeräts.

US 6 167 464 A offenbart ein mobiles HMI für die Überwachung der Betätigung eines räumlich verteilten Steuersystems in einer Fabrik oder ähnlichem und stellt einem zentralen Prozessor ein Positionssignal bereit.

WO 2022/258575 A1 offenbart ein Überwachungssystem für ein optisches Anzeigeelement eines Not-Halt-Schalters. Das Überwachungssystem umfasst ein Betätigungselement, umfassend das optische Anzeigeelement, einen optischen Sensor, und eine Sicherheitselektronik, verbunden mit dem optische Anzeigeelement und dem optischen Sensor, wobei die Sicherheitselektronik einen sicheren Ausgang und sicheren Eingang umfasst und mit dem optischen Anzeigeelement über den sicheren Ausgang verbunden ist und mit dem optischen Sensor über den sicheren Eingang verbunden ist.

WO 2017139817 A1 offenbart ein Steuersystem für elektrisch gesteuerte Installationen. Das Steuersystem umfasst mindestens eine tragbare, mobile, handgehaltene Betätigungsvorrichtung zur Anzeige von Informationen und zur Eingabe von Steuerbefehlen durch einen Bediener.

Um die bekannten Meldeleuchten sichtbar zu machen, werden sie oft an einer höheren Position an der Anlage/Maschine angebracht. Dabei müssen Bediener oder Personen in der Umgebung der Maschine aktiv in die Richtung der Meldeleuchte schauen, um die aktuelle Information über den Zustand der Anlage beziehungsweise Maschine beziehen zu können. Bei bestimmten Aufgaben kann die Sichtbarkeit eingeschränkt sein, wodurch sich wiederum das Risiko für Unfälle erhöht.

Es ist Aufgabe der vorliegenden Anmeldung das Sicherheitsniveau bei der Bedienung von Anlagen beziehungsweise von Maschinen zu erhöhen. Eine weitere Aufgabe der vorliegenden Anmeldung ist es ein sicheres Leuchten und sicheres Nicht-Leuchten der Meldeleuchte, vor allem bei der Bedienung der Anlage via Bedieneinheit zu garantieren. Eine weitere Aufgabe der vorliegenden Anmeldung ist es höchste SIL-/ PL-Werte zu erreichen.

### KURZBESCHREIBUNG DER ERFINDUNG

Diese Aufgabe wird durch eine Bedieneinheit zum Bedienen von mindestens einer Anlage aus einer Vielzahl von Anlagen gelöst. Die Bedieneinheit umfasst einen Kommunikationsanschluss zum Verbinden der Bedieneinheit mit der mindestens einen Anlage, wobei der Kommunikationsanschluss eingerichtet ist, um eine Kommunikation zwischen der Bedieneinheit und mindestens einer Anlage bereitzustellen, eine Meldeeinheit zum Ausgeben und zum ununterbrochenen wiederholten weiteren Ausgeben eines Zustands der mindestens einen Anlage, wobei die Meldeeinheit an der Bedieneinheit bereitgestellt und eingerichtet ist, einen Zustand der Anlage auszugeben, und eine Sicherheitselektronik zum Überwachen der Meldeeinheit beim Ausgeben des Zustands der mindestens einen Anlage, wobei die Sicherheitselektronik mindestens einen sicheren Eingang und mindestens einen sicheren Ausgang umfasst, wobei die Sicherheitselektronik mit der Meldeeinheit über den mindestens einen sicheren Ausgang verbunden und mit einem Detektionselement über den mindestens einen sicheren Eingang verbunden ist. Das Detektionselement ist eingerichtet eine Ausgabe der Meldeeinheit zu detektieren. Der Zustand umfasst mindestens einen von einem Funktionszustand, einem Gefahrenzustand und einem Positionszustand.

Daraus ergibt sich der Vorteil, dass die Meldeeinheit durch eine Sicherheitselektronik überwacht wird, wodurch das Erreichen des höchsten SIL-Werts (SIL 3) oder PL-Werts (PL e) ermöglicht wird. Ein weiterer Vorteil ist, dass die Meldeeinheit direkt an der Bedieneinheit bereitgestellt und somit stets im Sichtfeld des Bedieners ist, welcher sich um die Anlage bewegen kann.

Nach einem ersten Aspekt ist die Sicherheitselektronik mit dem sicheren Ausgang über eine Rückführung einkanalig oder mehrkanalig mit der Meldeeinheit und mit dem sicheren Eingang einkanalig oder mehrkanalig mit dem Detektionselement zur Auswertung verbunden.

Dadurch kann über die Sicherheitselektronik sichergestellt werden, dass die Verbindung und die Funktion der Meldeeinheit und des Detektionselements mit der Sicherheitselektronik sicher überwacht werden und Verbindungsabbrüche erkannt werden können, wodurch ein sicheres Leuchten und Nicht-Leuchten der Meldeleuchte garantiert werden kann.

Nach einem weiteren Aspekt umfasst die Meldeeinheit mindestens einen Signalgeber.

Dadurch kann dem Bediener über die Bedieneinheit in Echtzeit Rückmeldung über den Zustand der Anlage ausgegeben werden, wodurch das Sicherheitsniveau erhöht wird und so höchste SIL-/ PL-Werte erreicht werden können.

Nach einem weiteren Aspekt ist jedes von dem mindestens einem von dem Signalgeber über jeweils mindestens einen sicheren Ausgang mit der Sicherheitselektronik verbunden.

Dadurch wird die Verbindung zu jedem einzelnen von dem Signalgeber sicher eingerichtet, wodurch das Erreichen des höchsten SIL-Werts (SIL 3) oder PL-Werts (PL e) ermöglicht wird.

Nach einem weiteren Aspekt umfasst der mindestens eine Signalgeber mindestens eines von einem Leuchtmittel, einem Akustikgeber und einem Vibrationsgeber.

Dadurch kann der Zustand der Anlage dem Bediener via Licht, Geräusch oder Vibration einzeln oder in Kombination ausgegeben werden, um das das Sicherheitsniveau weiter zu erhöhen und so höchste SIL-/ PL-Werte zu erreichen.

Nach einem weiteren Aspekt umfasst das Leuchtmittel ein einzelnes Leuchtmittel oder kombinierte Leuchtmittel.

Mit diesem Leuchtmittel können Anforderungen eines Anlagensystems und sämtliche Vorgaben aus relevanten Normen hinsichtlich eines Leuchtmittels berücksichtigt und umgesetzt werden.

Nach einem weiteren Aspekt gibt die Meldeeinheit den Funktionszustand, den Gefahrenzustand und den Positionszustand der mindestens einen Anlage mit einer von einer Leuchtinformation, Akustikinformation und Vibrationsinformation aus.

Dadurch wird das Sicherheitsniveau erhöht und es können höchste SIL-/ PL-Werte erreicht werden.

Nach einem weiteren Aspekt umfasst das Detektionselement mindestens einen Signaldetektor, wobei die Anzahl der Signaldetektoren von der Anzahl der Signalgeber abweichen kann.

Dadurch ist es möglich, dass ein einzelner Signaldetektor die Ausgabe mehrerer Signalgeber detektiert, oder dass mehrere Signaldetektoren die Ausgabe eines Signalgebers detektieren. Somit kann das Sicherheitsniveau an die vorliegenden Umstände angepasst, Kosten bei Bedarf reduziert und ein hohes Sicherheitsniveau gewährleistet werden.

Nach einem weiteren Aspekt umfasst der mindestens eine Signaldetektor mindestens eines von einem Fotowiderstand, einer Fotodiode, einem Fototransistor, einem Akustiksensor und einem Vibrationssensor.

Dadurch kann das Detektionselement Leuchtsignale, Akustiksignale und Vibrationssignale detektieren.

Nach einem weiteren Aspekt ist jeder Signaldetektor über jeweils mindestens einen sicheren Eingang mit der Sicherheitselektronik verbunden.

Dadurch wird die Verbindung zu jedem Signaldetektor des Detektionselements sicher überwacht, wodurch das Erreichen des höchsten SIL-Werts (SIL 3) oder PL-Werts (PL e) ermöglicht wird.

Nach einem weiteren Aspekt kann die Bedieneinheit eine von der mindestens einen Anlage unabhängige Komponente oder ein Teil der Anlage sein.

Dadurch kann die Stromversorgung der Bedieneinheit einerseits durch die Anlage, extern über ein Stromkabel oder autark über eine Batterie erfolgen.

Nach einem weiteren Aspekt kommuniziert der Kommunikationsanschluss drahtlos oder drahtgebunden mit der mindestens einen Anlage.

Dadurch kann sich einerseits der Bediener der Bedieneinheit frei in der Umgebung der Anlage bewegen.

Nach einem weiteren Aspekt umfasst die Bedieneinheit mindestens ein Bedienelement, eingerichtet, um die Bedieneinheit zu bedienen und eine Anzeige, eingerichtet, um Information/en über einen Status der mindestens einen Anlage und Information/en über einen Status der Bedieneinheit anzuzeigen.

Dadurch kann der Bediener die Anlage ganz über die Bedieneinheit bedienen und bekommt sämtliche relevanten Informationen der Anlage und der Bedieneinheit angezeigt.

Die oben genannte Aufgabe wird ferner durch ein Verfahren zum Bedienen mindestens einer Anlage aus einer Vielzahl von Anlagen mit der zuvor beschriebenen Bedieneinheit gelöst. Das Verfahren umfasst ein Verbinden der Bedieneinheit mit der mindestens einen Anlage über einen Kommunikationsanschluss der Bedieneinheit, ein Ausgeben eines Zustands der mindestens einen Anlage, umfassend einen von einem Funktionszustand, einem Gefahrenzustand und einem Positionszustand, über eine Meldeeinheit der Bedieneinheit als mindestens eines von einer Leuchtinformation, Akustikinformation und Vibrationsinformation, ein Bedienen der mindestens einen Anlage via der Bedieneinheit, und ein weiteres Ausgeben eines Zustands der mindestens einen Anlage, umfassend einen von dem Funktionszustand, dem Gefahrenzustand und dem Positionszustand, über die Meldeeinheit als mindestens eines von der Leuchtinformation, Akustikinformation und Vibrationsinformation, wobei das weitere Ausgeben während der Verbindung zwischen Bedieneinheit und der mindestens einen Anlage ununterbrochen wiederholt wird und wobei beim weiteren Ausgeben die Meldeeinheit über eine Sicherheitselektronik der Bedieneinheit überwacht wird. Dabei umfasst die Sicherheitselektronik einen sicheren Eingang und einen sicheren Ausgang und die Meldeeinheit ist mit der Sicherheitselektronik über den mindestens einen sicheren Ausgang verbunden.

Nach einem Aspekt umfasst das Verfahren ferner ein Informieren über einen Verbindungsabbruch der Bedieneinheit mit der mindestens einen Anlage via der Meldeeinheit der Bedieneinheit, und ein selbstständiges Übergehen der mindestens einen Anlage in einen sicheren Zustand bei Verbindungsabbruch der mindestens einen Anlage mit der Bedieneinheit, wobei das Informieren mit einem Signal, unterschiedlich von einem Signal wiedergebend den Funktionszustand, den Gefahrenzustand und den Positionszustand der mindestens einen Anlage, erfolgt.

Daraus ergibt sich der Vorteil, dass Bedienen mindestens einer Anlage überwacht wird, wodurch das Erreichen des höchsten SIL-Werts (SIL 3) oder PL-Werts (PL e) ermöglicht wird.

Nach einem weiteren Aspekt erfolgt das Verbinden über eine drahtgebundene oder drahtlose Kommunikation.

Dadurch kann das Bediengerät mobil verwendet werden in dem Sinn, dass sich das Bediengerät einfach mit einer Anlage aus einer Vielzahl von Anlagen verbinden kann.

Nach einem weiteren Aspekt wird das Ausgeben via der Sicherheitselektronik über eine Ansteuerung und eine Rückführung eines Signals an die Meldeeinheit überwacht.

Dadurch wird das Erreichen des höchsten SIL-Werts (SIL 3) oder PL-Werts (PL e) ermöglicht.

Nach einem weiteren Aspekt umfasst das Ausgeben eine Information, welche ein Verlassen der Bedieneinheit eines örtlich zulässigen Bereichs für die Verbindung zwischen Bedieneinheit und Anlage umfasst.

Dadurch wird sichergestellt, dass sich der Bediener in einem vorbestimmten örtlich zulässigen Bereich der zu bedienenden Anlage befindet, um die Sicherheit der Bedienung zu gewährleisten.

Nach einem weiteren Aspekt umfasst das Verfahren ferner ein Überwachen der Meldeeinheit über den sicheren Ausgang der Sicherheitselektronik der Bedieneinheit.

Durch das Überwachen der Meldeeinheit kann ein hoher Sicherheitsstandard - hoher SIL beziehungsweise PL - erreicht werden.

Nach einem weiteren Aspekt umfasst das Verfahren ferner ein Informieren über einen Verbindungsaufbau oder einen Verbindungsabbruch zwischen Bedieneinheit und der mindestens einen Anlage mittels der Meldeeinheit.

Die oben genannte Aufgabe wird ferner durch die Verwendung der zuvor beschriebenen Bedieneinheit für mindestens eine Anlage aus einer Vielzahl von Anlagen gelöst.

Dadurch können mehrere Anlagen in einer Fertigungsumgebung, wie beispielsweise einer Fertigungshalle, mit der Bedieneinheit bedient werden, wodurch die Produktivität gesteigert und die Kosten reduziert werden können.

### BESCHREIBUNG DER ZEICHNUNGEN

Ein vollständigeres Verständnis der Erfindung und vieler damit verbundener Vorteile wird leicht erreicht, wenn diese durch Bezugnahme auf die folgende detaillierte Beschreibung in Verbindung mit den beigefügten Figuren betrachtet wird.
Fig. 1 ist eine schematische Darstellung einer Bedieneinheit entsprechend einer ersten Ausführungsform.
Fig. 2 stellt einen schematischen Aufbau der Bedieneinheit 100 aus Fig. 1, in Kommunikation mit einer Anlage, dar.
Fig. 3 ist eine schematische Darstellung einer Verbindung zwischen Sicherheitselektronik und Meldeeinheit beziehungsweise Detektionselement.
Figuren 4A bis 4D sind schematische Darstellungen der Verbindung zwischen Sicherheitselektronik und der Meldeeinheit.
Figuren 5A und 5B sind schematische Darstellungen der Verbindung zwischen Sicherheitselektronik und des Detektionselements.
Fig. 6 ist eine schematische Darstellung der Verbindung zwischen Sicherheitselektronik und Meldeeinheit beziehungsweise Detektionselement entsprechend einer ersten Ausführungsform.
Fig. 7 ist eine schematische Darstellung der Verbindung zwischen Sicherheitselektronik und Meldeeinheit beziehungsweise Detektionselement entsprechend einer zweiten Ausführungsform.
Fig. 8 ist ein Ablaufdiagramm eines Verfahrens zum Bedienen mindestens einer Anlage.
Fig. 9 ist ein weiteres Ablaufdiagramm des Verfahrens zum Bedienen mindestens einer Anlage.

### DETAILLIERTE BESCHREIBUNG DER ERFINDUNG

Die Erfindung wird nun anhand der Figuren beschrieben. Es versteht sich, dass die hier beschriebenen Aspekte der Erfindung nur Beispiele sind und den Schutzbereich der Ansprüche in keiner Weise einschränken. Die Erfindung wird durch die Ansprüche und ihre Äquivalente definiert. Es versteht sich, dass Merkmale eines Aspekts der Erfindung mit einem Merkmal eines anderen Aspekts oder anderer Aspekte der Erfindung kombiniert werden können, sofern sie sich nicht gegenseitig ausschließen.

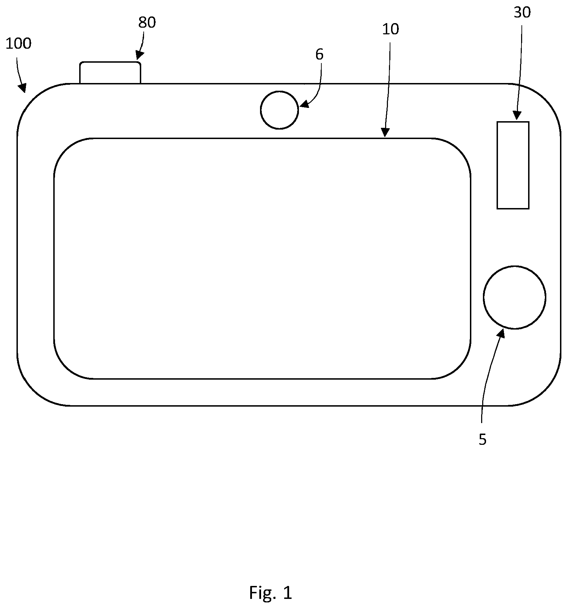

Fig. 1 zeigt eine schematische Darstellung einer Bedieneinheit 100 entsprechend einer ersten Ausführungsform. Die Bedieneinheit 100 ist dargestellt aus der Sicht eines Bedieners, welcher mit der Bedieneinheit 100 eine Anlage 90 bedienen kann. Die Bedieneinheit 100 umfasst eine Anzeige 10, ein erstes und zweites Bedienelement 5, 6, eine Meldeeinheit 30 und einen Kommunikationsanschluss 80.

Die Meldeeinheit 30 ist an der Bedieneinheit 100 bereitgestellt und ist eingerichtet, einen Zustand der Anlage 90 auszugeben. Der Zustand der Anlage 90 umfasst mindestens einen von einem Funktionszustand, einem Gefahrenzustand und einem Positionszustand. Ferner kann die Meldeeinheit 30 über einen Verbindungsabbruch beziehungsweise Kommunikationsabbruch der Bedieneinheit 100 mit der Anlage 90 informieren. Ein Verbindungsabbruch kommt zustande, wenn der Kommunikationsanschluss 80 die Verbindung/Kommunikation mit der zuvor verbundenen Anlage 90 verliert.

Die Meldeeinheit 30 kann aber auch über einen Verbindungsaufbau beziehungsweise Kommunikationsaufbau beziehungsweise ein Pairing der Bedieneinheit 100 mit der Anlage 90 informieren. Zu diesem Zweck kann die Meldeeinheit 30 verwendet werden, um einem Bediener, welcher die mindestens eine Anlage 90 mittels der Bedieneinheit 100 bedient, eine Rückmeldung über das Pairing zu geben. In diesem Fall kann in einem nichteinschränkenden Beispiel die Meldeeinheit 30 ein mit der an der zu verbindenden Anlage 90 angebrachten Meldeleuchte (nicht dargestellt) abgestimmtes Leuchten signalisieren, um dem Bediener die ausgewählte Anlage 90 aus einer Vielzahl von Anlagen 90 optisch anzuzeigen. Das abgestimmte Leuchten kann in einem nichteinschränkenden Beispiel ein Blinken und /oder ein bestimmtes Farbmuster umfassen. In einem weiteren nichteinschränkenden Beispiel kann die Bedieneinheit 100 mittels der Meldeeinheit 30 das Pairing zwischen Bedieneinheit 100 und Anlage 90 anzeigen.

Der Kommunikationsanschluss 80 ist eingerichtet, um eine Kommunikation beziehungsweise Verbindung beziehungsweise Pairing zwischen der Bedieneinheit 100 und mindestens einer Anlage 90 bereitzustellen. Die Kommunikation erfolgt dabei in Echtzeit beziehungsweise in Intervallen im Millisekunden-Bereich. Der Kommunikationsanschluss 80 kann mit der Anlage 90 wired beziehungsweise drahtgebunden oder wireless beziehungsweise drahtlos kommunizieren beziehungsweise verbunden sein. Das Verbinden der Bedieneinheit 100 mit der Anlage 90 umfasst die Kommunikation der Bedieneinheit 100 mit der Anlage 90. Dabei kann die Bedieneinheit 100 ferner eine von der Anlage 90 unabhängige Komponente oder ein Teil der Anlage 90 sein. Ist die Bedieneinheit 100 eine von der Anlage 90 unabhängige Komponente und kommuniziert/verbindet sich die Bedieneinheit 100 drahtlos mit der Anlage 90, kann die Bedieneinheit 100 in diesem Beispiel als eine mobile Bedieneinheit angesehen werden. In diesem Beispiel kann die Bedieneinheit 100 elektrischen Strom über eine Batterie oder ein Stromkabel beziehen, wobei das Stromkabel mit einer anderen Stromquelle als der Anlage 90 verbunden ist. In einem anderen Beispiel kann die Bedieneinheit 100 als eine halb-mobile Bedieneinheit angesehen werden, wenn die Bedieneinheit 100 drahtgebunden mit der Anlage 90 kommuniziert/verbunden ist, wobei mindestens eines von der Kommunikation über den Kommunikationsanschluss 80 oder der Stromversorgung über eine feste Leitung erfolgt. In einem weiteren Beispiel kann die Bedieneinheit 100 als eine stationäre Bedieneinheit angesehen werden, wenn die Bedieneinheit 100 als ein Teil der Anlage 90 bereitgestellt wird. In diesem Beispiel ist die Bedieneinheit 100 fest an der Anlage angebracht und wird durch die Anlage 90 mit elektrischem Strom versorgt. Die Kommunikation der stationären Bedieneinheit mit der Anlage 90 kann in diesem Beispiel drahtlos oder drahtgebunden erfolgen. Zur drahtlosen Kommunikation (wireless) können sämtliche bekannte Standards, wie beispielsweise WiFi, Zigbee, Thread, Bluetooth, LTE, 5G und so weiter, herangezogen werden.

Das erste Bedienelement 5 und das zweite Bedienelement 6 sind eingerichtet, um die Bedieneinheit 100 zu bedienen. Insbesondere kann ein Bediener der Anlage 90 über die Bedienelemente 5, 6 der Bedieneinheit 100 die Anlage 90 bedienen. Das erste Bedienelement 5 ist beispielsweise eines von einem Not-Halt, Not-Aus und Not-Stopp. Der Bediener kann die Anlage 90 über das erste Bedienelement 5 in Abhängigkeit eines Zustands der Anlage 90 schnellstmöglich Stillsetzen, im Normalbetrieb anhalten oder die elektrische Energieversorgung der Anlage 90 abschalten. Das erste Bedienelement 5 ist somit ein aus dem Stand der Technik bekanntes Bauteil. Das zweite Bedienelement 6 ist eine Komponente mit welcher Befehle und Einstellungen an der Anzeige 10 ausgewählt und angesteuert werden können. In einem Beispiel, in welchem auf das zweite Bedienelement 6 verzichtet wird, umfasst die Anzeige 10 einen Touch-Screen. In einem weiteren Beispiel kann die Anzeige 10 eine Komponente eines Tablets (nicht dargestellt) sein, wobei das Tablet über einen eigenen Kommunikationsweg, wie beispielsweise LAN, WLAN und so weiter, mit der Anlage 90 kommunizieren kann. In diesem Beispiel kann die Anlage 90 über das Tablet eingerichtet und bedient werden, ohne jedoch durch das Tablet allein höchste Sicherheitsniveaus und folglich die höchsten SIL-/PL-Werte zu erreichen.

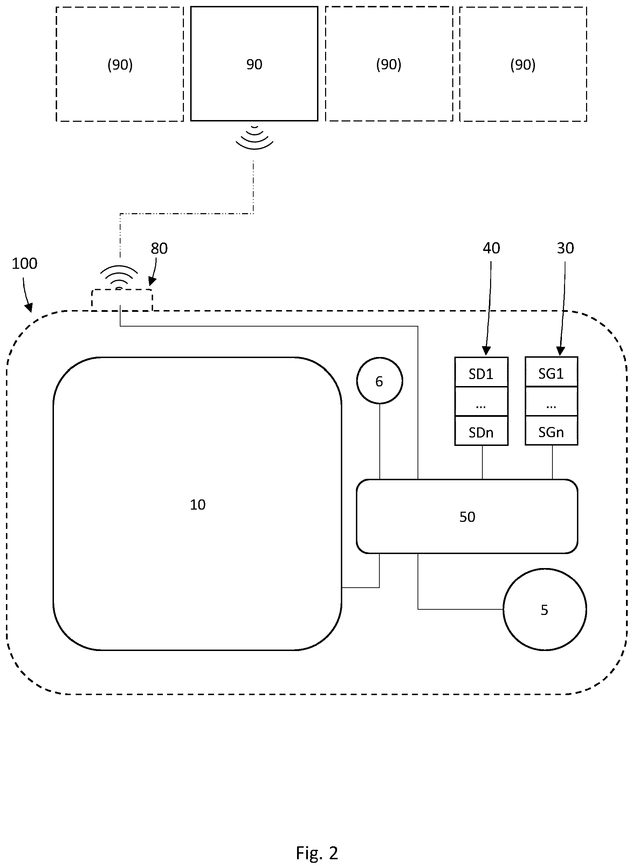

Fig. 2 stellt einen schematischer Aufbau der Bedieneinheit 100 aus Fig. 1 dar, welche mit einer Anlage 90 aus einer Vielzahl von Anlagen 90 verbunden ist und mit dieser kommuniziert. Die Verbindung der Bedieneinheit 100 mit der Anlage 90 erfolgt über den Kommunikationsanschluss 80. Die Bedieneinheit 100 kann verwendet werden, um sich mit einer aus mehreren Anlagen zu verbinden und mit dieser zu kommunizieren. Die Wahl, mit welcher Anlage 90 aus der Vielzahl von Anlagen 90 sich die Bedieneinheit 100 verbinden soll, kann über die Bedieneinheit 100 gewählt werden.

Wie zu sehen, ist ein schematischer Aufbau der Bedieneinheit 100 dargestellt. Die Bedieneinheit 100 umfasst eine Sicherheitselektronik 50, welche elektronisch mit der Anzeige 10, dem ersten und zweiten Bedienelement 5, 6, der Meldeeinheit 30 und einem Detektionselement 40 verbunden ist.

Die Meldeeinheit 30 umfasst mindestens einen Signalgeber SG = SG1. Die Meldeeinheit 30 kann auch zwei Signalgeber SG = SG1 und SG2 oder eine Vielzahl von Signalgebern SG1, ..., SGn umfassen, wobei SGn eine n-fache Anzahl von Signalgebern darstellt. Beispielsweise umfasst die Meldeeinheit 30 bei n=4 Signalgebern den Signalgeber SG1, SG2, SG3 und SG4. In einem weiteren Beispiel umfasst die Meldeeinheit 30 bei n=6 Signalgebern den Signalgeber SG1, SG2, SG3, SG4, SG5 und SG6.

Der mindestens eine Signalgeber SG1, ..., SGn umfasst mindestens eines von einem Leuchtmittel, einem Akustikgeber und einem Vibrationsgeber, wobei das Leuchtmittel ein einzelnes Leuchtmittel oder kombinierte Leuchtmittel umfasst. Einzelne Leuchtmittel sind beispielsweise Lampen oder einzelne LEDs (light-emitting-diods). Kombinierte Leuchtmittel sind beispielsweise mehrere zusammengefasste einzelne LEDs. Die LEDs können in unterschiedliche Farben leuchten beziehungsweise unterschiedliche Farben wiedergeben (RGB-LEDs). Die Meldeeinheit 30 kann somit den Funktionszustand, den Gefahrenzustand und den Positionszustand der Anlage 90 mit einer von einer Leuchtinformation, Akustikinformation und Vibrationsinformation ausgeben. Die Meldeeinheit 30 ist derart an der Bedieneinheit 100 bereitgestellt und eingerichtet, dass der Bediener der Bedieneinheit 100 die Ausgabe der Meldeeinheit 30 als Leuchtinformation gut sehen, als Vibrationsinformation gut spüren und als Akustikinformation gut hören kann. In einem Beispiel, in dem die Meldeeinheit drei Signalgeber SG1, SG2 und SG3 umfasst, und jeder der drei Signalgeber SG1, SG2 und SG3 Leuchtmittel sind, kann die Meldeeinheit 30 einen Zustand der Anlage 90 durch eine Leuchtinformation ausgeben, um den Bediener auf den Zustand der Anlag e 90 hinzuweisen. In einem weiteren Beispiel, in dem als erster Signalgeber SG1 ein Leuchtmittel und als zweiter Signalgeber SG2 ein Akustikgeber bereitgestellt sind, kann die Meldeeinheit 30 einen Zustand der Anlage 90 durch eine Leuchtinformation und eine Akustikinformation ausgeben, um den Bediener auf den Zustand der Anlage 90 hinzuweisen. Wird ein Vibrationsgeber als Signalgeber der Meldeeinheit 30 verwendet, kann entsprechend eine Vibrationsinformation ausgegeben werden.

Jede von der Leuchtinformation, Akustikinformation und Vibrationsinformation kann durch die Anzahl der Signalgeber SG1, ..., SGn und die Sicherheitselektronik 50 bestimmt werden. Die Sicherheitselektronik 50 steuert die Meldeeinheit 30 beispielsweise durch Regulierung der Helligkeit und Farbe des Leuchtmittels, der Frequenz und Amplitude des Akustikgebers sowie der Stärke des Vibrationsgebers, wie später detailliert erläutert wird.

Das Detektionselement 40 umfasst mindestens einen Signaldetektor SD = SD1. Das Detektionselement 40 kann auch zwei Signaldetektoren SD = SD1 und SD2 oder eine Vielzahl von Signaldetektoren SD1, ..., SDn umfassen, wobei SDn eine n-fache Anzahl von Signaldetektoren darstellt. Beispielsweise umfasst das Detektionselement 40 bei n=4 Signaldetektoren den Signaldetektor SD1, SD2, SD3 und SD4. In einem weiteren Beispiel umfasst das Detektionselement 40 bei n=6 Signaldetektoren den Signaldetektor SD1, SD2, SD3, SD4, SD5 und SD6. Die Anzahl der Signaldetektoren SD1, ..., SDn kann von der Anzahl der Signalgeber SG1, ..., SGn abweichen. Als Signaldetektoren SD1, ..., SDn umfasst das Detektionselement 40 beliebige Arten von Detektoren zur Detektion der durch die Signalgeber SG1, ..., SGn ausgegebenen Informationen beziehungsweise Ausgabe. Als nichteinschränkendes Beispiel umfasst einer von den Signaldetektoren SD1, ..., SDn des Detektionselements 40 mindestens eines von einem Fotowiderstand, einer Fotodiode, einem Fototransistor, einem Akustiksensor und einem Vibrationssensor. In einem Beispiel, in dem der Signalgeber SG1, ..., SGn eine Leuchtinformation mit einem Leuchtmittel ausgibt, kann das Detektionselement 40 einen Lichtwellenleiter LWL umfassen, um die Leuchtinformation über den Lichtwellenleiter LWL an den Signaldetektor SD1, ..., SDn zu leiten. Das Detektionselement 40 ist derart an der Bedieneinheit 100 bereitgestellt und eingerichtet, um die Ausgabe der Meldeeinheit 30 zu erfassen. Hierzu kann das Detektionselement 40 in der Bedieneinheit 100 derart bereitgestellt sein, dass der Bediener das Detektionselement 40 nicht sehen kann.

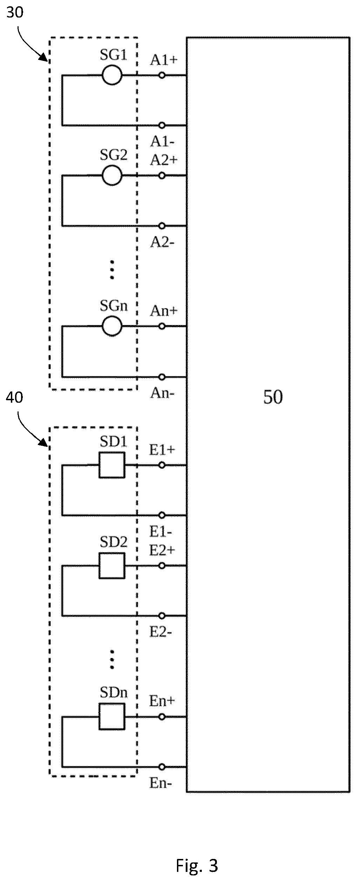

Fig. 3 ist eine schematische Darstellung einer Verbindung zwischen Sicherheitselektronik 50 und der Meldeeinheit 30 beziehungsweise dem Detektionselement 40. Die Sicherheitselektronik 50 umfasst mindestens einen sicheren Eingang E1+, E1-, ..., En+, En-und mindestens einen sicheren Ausgang A1+, A1-, ..., An+, An-, wobei jeder von dem sicheren Eingang und sicheren Ausgang einen positiven + und negativen - Strang umfasst. En+, En- beziehungsweise An+, An- stellen eine n-fache Anzahl von sicheren Eingängen beziehungsweise sicheren Ausgängen dar. Beispielsweise umfasst der sichere Eingang bei n=4 sicheren Eingängen die sicheren Eingänge E1+, E1-, E2+, E2-, E3+, E3- und E4+, E4-. In einem weiteren Beispiel umfasst der sichere Eingang bei n=6 sicheren Eingängen die sicheren Eingänge E1+, E1-, E2+, E2-, E3+, E3-, E4+, E4-, E5+, E5- und E6+, E6-. Gleiches gilt für den sicheren Ausgang A1+, A1-, ..., An+, An- in analoger Weise.

Die Sicherheitselektronik 50 ist mit dem Detektionselement 40 über den mindestens einen sicheren Eingang E1+, E1-, ..., En+, En- verbunden. Die Sicherheitselektronik 50 ist mit der Meldeeinheit 30 über den mindestens einen sicheren Ausgang A1+, A1-, ..., An+, An- verbunden. Die Anzahl der sicheren Eingänge E1+, E1-, ..., En+, En- kann von der Anzahl der Signaldetektoren SD1, ..., SDn des Detektionselements 40 abhängen. Die Anzahl der sicheren Ausgänge A1+, A1-, ..., An+, An- kann von der Anzahl der Signalgeber SG1, ..., SGn der Meldeeinheit 30 abhängen.

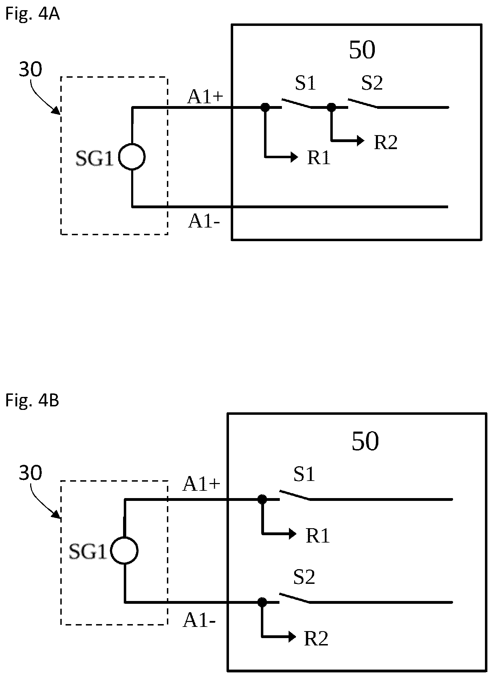

Mit Bezug auf die Figuren 4A bis 4D werden Beispiele von Systemen beschrieben, wie via der Verbindung zwischen der Sicherheitselektronik 50 und Signalgebern der Meldeeinheit 30 ein sicherer Ausgang A1+, A1-, ..., An+, An- mit Rückführungen R1, R2 bereitgestellt wird, um ein höheres Sicherheitsniveau beziehungsweise höhere SIL-/PL-Werte zu erreichen. Der sichere Ausgang A1+, A1-, ..., An+, An- mit Rückführungen R1, R2 stellt dabei einen Ausgang in der Sicherheitselektronik 50 dar, welcher im Falle eines Störfalls sicherstellt, dass ein Signal, umfassend Strom und/oder Spannung, an einem sicheren Ausgang A1+, A1-, ..., An+, An- nicht mehr an einen von den Signalgebern SG1, ..., SGn ausgegeben wird. So kann beispielsweise über die Rückführungen R1, R2 und die Sicherheitselektronik 50 in einem Störfall, bei welchem ein Fehler an einem der Schalter S1, S2 vorliegt, erkannt werden, dass kein Signal mehr über den sicheren Ausgang A1+, A1-, ..., An+, An- an einen von den Signalgebern SG1, ..., SGn ausgegeben wird, wodurch die Anlage 90 in einen sicheren Zustand übergeführt werden kann. Die Rückführungen R1, R2 können beispielweise als Signal neben dem Strom und/oder der Spannung beziehungsweise zusätzlich zum Strom und/oder der Spannung eine Schaltzeit, einen Zeitimpuls für ein "EIN"-Schalten oder "AUS"-Schalten der Schalter S1, S2, einen Spannungspegel und so weiter rückführen. Hierdurch ist es möglich, die Ausgabe oder Nicht-Ausgabe des mindestens einen Signalgebers SG1, ..., SGn sicher zu überwachen. Dadurch wird es ermöglicht, Schäden oder Gefahrensituationen zu vermeiden und so die Sicherheit entsprechend den SIL-/PL-Werten zu erhöhen. Die Rückführungen R1, R2 können je nach Anforderung von gar keiner Information bis zu einer beliebigen Anzahl von Informationen beinhalten. Beispielsweise werden bei gar keiner Information die Schalter S1, S2 nicht durch die Rückführungen R1, R2 überwacht, wodurch keine hohen Sicherheitswerte erreicht werden können.

Die Sicherheitselektronik 50 übernimmt die Ansteuerung des mindestens einen Signalgebers SG1, ..., SGn der Meldeeinheit 30 und überwacht durch die Rückführungen R1, R2 die ausgegebene Leuchtinformation, Akustikinformation und/oder Vibrationsinformation, wie beispielsweise der Helligkeit und Farbe beim Leuchtmittel, der Frequenz und Amplitude beim Akustikgeber und der Stärke beim Vibrationsgeber. Die einzelnen Signalgeber SG1, ..., SGn werden mit Hilfe der Sicherheitselektronik 50 über sichere Ausgängen A1+, A1-, ..., An+, An- angesteuert, wobei die Ansteuerung einkanalig mit einem Kanal K1 oder mehrkanalig erfolgen kann.

Eine ein- oder mehrkanalige Ansteuerung durch die Sicherheitselektronik 50 beschreibt die Anzahl der unabhängigen sicheren Ausgänge A1+, A1-, ..., An+, An-, die verwendet werden, um die einzelnen Signalgeber SG1, ..., SGn zu steuern. Eine einkanalige Ansteuerung bedeutet, dass nur ein einziger sicherer Ausgang A1+, A1- für einen Signalgeber SG = SG1 vorhanden ist, um den Signalgeber SG zu steuern. Eine mehrkanalige Ansteuerung hingegen bedeutet, dass mehrere unabhängige sichere Ausgänge A1+, A1-, ..., An+, An- vorhanden sind, welche jedem einzelnen von den Signalgebern SG, ..., SGn zugeordnet sind. Durch die Rückführungen R1, R2, welche für zusätzliche Überwachung und Sicherheit sorgen, kann die Gesamtsicherheit weiter erhöht werden. Durch die sicheren Ausgänge A1+, A1-, ..., An+, An- in Kombination mit den Rückführungen R1, R2 können Fehler am jeweiligen sicheren Ausgang A1+, A1-, ..., An+, An- erkannt und im relevanten Fehlerfall eine sichere und zuverlässig erfolgende Reaktion eingeleitet werden, wie beispielsweise das sichere Abschalten der Anlage 90. So wird eine höhere Flexibilität geschaffen und die Zuverlässigkeit des gesamten Systems erhöht, da es mehrere redundante sichere Ausgänge gibt, welche das System ansteuern und überwachen können.

Es ist zu beachten, dass eine alleinige Überwachung der Spannung und/oder des Stroms an dem mindestens einem sicheren Ausgang A1+, A1-, ..., An+, An- keine garantiert sichere Aussage über die Funktion des mindestens einen Signalgebers SG1, ..., SGn geben kann. So kann beispielsweise bei Anliegen einer Spannung oder Stroms über den mindestens einen sicheren Ausgang A1+, A1-, ..., An+, An- an einem Leuchtmittel das Leuchten aufgrund eines Fehlers des Leuchtmittels ausbleiben. In einem weiteren Beispiel kann bei Anliegen einer Spannung oder Stroms an einem Akustikgeber das Erzeugen einer Akustikinformation, wie beispielsweise eines Warntons, aufgrund eines Fehlers ausbleiben. In einem weiteren Beispiel kann bei Anliegen einer Spannung oder Stroms an einem Vibrationsgeber das Erzeugen einer Vibrationsinformation aufgrund eines Fehlers ausbleiben.

Um eine sichere Aussage über die Funktion des mindestens einen Signalgebers SG1, ..., SGn geben zu können, wird daher zusätzlich zur Überwachung der Spannung und/oder des Stroms an dem mindestens einem sicheren Ausgang A1+, A1-, ..., An+, Anein Abgleich zum Signal von dem mindestens einem Signaldetektor SD1, ..., SDn durchgeführt beziehungsweise überwacht. Dadurch kann auch sichergestellt werden, dass der mindestens eine Signaldetektor SD1, ..., SDn das Signal des mindestens einen Signalgebers SG1, ..., SGn detektiert und nicht ein externes Signal. So wird in einem nichteinschränkenden Beispiel sichergestellt, dass ein Akustiksignal einer fremden Akustikquelle nicht die sichere Aussage über die Funktion des Akustikgebers der Bedieneinheit 100 beeinflusst.

Fig. 4A zeigt ein erstes Beispiel der Verbindung zwischen der Sicherheitselektronik 50 und der Meldeeinheit 30, bei welcher die Meldeeinheit 30 nur einen Signalgeber SG1 umfasst. Der eine Signalgeber SG wird durch die Sicherheitselektronik 50 zweikanalig über zwei in Serie geschaltete Schalter S1, S2 angesteuert. Hierzu umfasst jeder der beiden Schalter S1, S2 zur Überwachung jeweils eine Rückführung R1, R2. Der sichere Ausgang A1+, A1- gemäß dem ersten Beispiel wird somit durch Bereitstellen von zwei Schaltern S1, S2 in Serie und Überwachen der Schalter S1, S2 über die Rückführungen R1, R2 am positiven Strang A1+ (des sicheren Ausgangs) definiert. In diesem ersten Beispiel wird das ausgehende Signal, umfassend eine Spannung und/oder einen Strom, an den Signalgeber SG über die Rückführungen R1, R2 rückgeführt, wodurch es zu einer Überwachung des Rückführkreises beziehungsweise einem Rücklesen der Schalter S1, S2 kommt. Kommt es in diesem Beispiel zu einem Erdschluss (wenn An- auf Erde fällt) kann noch zweikanalig abgeschaltet werden.

Fig. 4B zeigt ein zweites Beispiel der Verbindung zwischen der Sicherheitselektronik 50 und der Meldeeinheit 30, bei welcher die Meldeeinheit 30 ebenfalls nur einen Signalgeber SG = SG1 umfasst. Anders als in Fig. 4A sind die Schalter S1, S2 in diesem Beispiel jeweils am positiven Strang A1+ und negativen Strang A1- bereitgestellt und werden jeweils über die Rückführungen R1, R2 überwacht. In diesem Beispiel kann bei einem Erdschluss (wenn An- auf Erde fällt) nicht mehr zweikanalig abgeschaltet werden.

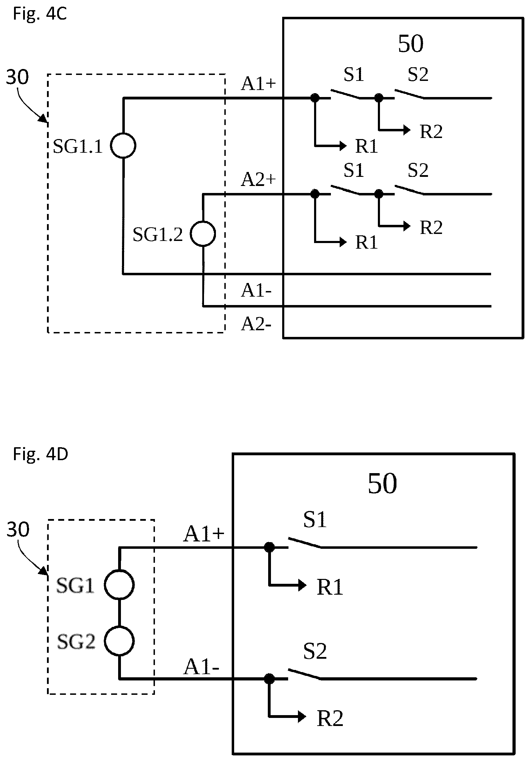

Fig. 4C zeigt ein drittes Beispiel der Verbindung zwischen der Sicherheitselektronik 50 und der Meldeeinheit 30. Um eine garantiert sichere Aussage über die Funktion des mindestens einen Signalgebers SG1, ..., SGn geben zu können und so die sichere Ausgabe der Meldeeinheit 30 zu gewährleisten, können in einem Beispiel mehrkanalige Signalgeber SG1, ..., SGn, also mit mindestens zwei Kanälen, verwendet werden. In diesem dritten Beispiel umfasst die Meldeeinheit 30 einen zweikanaligen Signalgeber SG1 mit zwei Kanälen SG1.1 und SG1.2. Jeder der zwei Kanäle SG1.1 und SG1.2 wird über eigene sichere Ausgänge A1+, A1- und A2+, A2- durch die Sicherheitselektronik 50 angesteuert und überwacht. Die Überwachung der sicheren Ausgänge A1+, A1- und A2+, A2- erfolgt über jeweils den positiven Strang A1+, A2+ über jeweils zwei Rückführungen R1, R2 in Serie.

Fig. 4D zeigt ein viertes Beispiel der Verbindung zwischen der Sicherheitselektronik 50 und der Meldeeinheit 30, bei welcher die Meldeeinheit 30 zwei Signalgeber SG1, SG2 umfasst. In diesem Beispiel werden die Schalter S1, S2 wie im zweiten Beispiel gemäß Fig. 4B überwacht.

Weitere Beispiele und Ausführungen der Verbindung zwischen der Sicherheitselektronik 50 und der Meldeeinheit 30 sind möglich, welche sich durch eine Kombination von ein- oder mehrkanaligen Signalgebern SG1, ..., SGn mit sicheren Ausgängen A1+, A1-, ..., An+, An- der Sicherheitselektronik 50 ergibt. Die Wahl der Verbindung zwischen der Sicherheitselektronik 50 und der Meldeeinheit 30 kann entsprechend der zu erreichenden beziehungsweise gewünschten SIL-/PL-Werte getroffen werden.

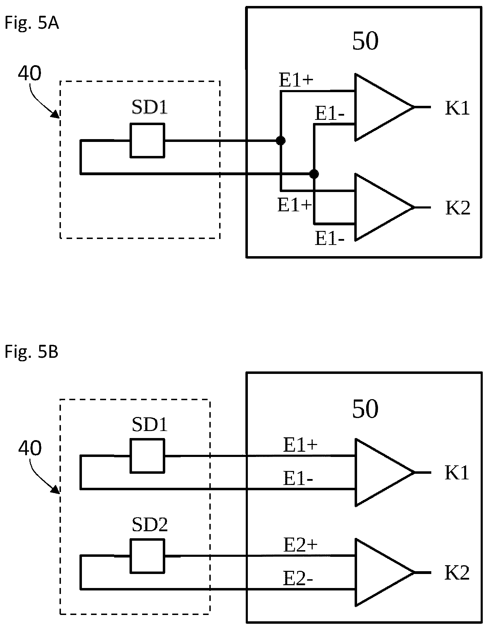

Figuren 5A und 5B zeigen Beispiele von Systemen, wie via einer Verbindung zwischen der Sicherheitselektronik 50 und Signaldetektoren SD1, ..., SDn des Detektionselements 40 ein sicherer Eingang E1+, E1-, ..., En+, En- einkanalig oder mehrkanalig bereitgestellt wird, um ein höheres Sicherheitsniveau beziehungsweise höhere SIL-/PL-Werte zu erreichen.

Fig. 5A zeigt die Verbindung der Sicherheitselektronik 50 mit einem Detektionselement 40, umfassend einen Signaldetektor SD1 = SD mit einer zweikanaligen Überwachung des sicheren Eingangs E1+, E1-. Der Signaldetektor SD1 ist über einen positiven Strang E1+ und einen negativen Strang E1- mit dem sicheren Eingang E1+, E1- verbunden, wobei der sichere Eingang E1+, E1- auf zwei Kanäle K1 und K2 (zweikanalig) aufgeteilt wird. Dadurch wird eine höhere Zuverlässigkeit und Sicherheit erreicht, da Fehler in der Sicherheitselektronik 50 zuverlässig erkannt werden können. So können mögliche Fehler des Signaldetektors SD1 im Zusammenhang mit dem Signalgeber SG1, ..., SGn und dessen Funktion erkannt werden. In einem nichteinschränkenden Beispiel entspricht die Verbindung einer einkanaligen Lösung des Signaldetektors SD1 und einer zweikanaligen Lösung der Sicherheitselektronik 50.

Fig. 5B zeigt die Verbindung der Sicherheitselektronik 50 mit einem Detektionselement 40, umfassend zwei Signaldetektoren SD1 und SD2. Die zwei Signaldetektoren SD1 und SD2 sind zweikanalig mit den sicheren Eingänge E1+, E1- und E2+, E2- der Sicherheitselektronik 50 verbunden. Jeder von den zwei Signaldetektoren SD1, SD2 wird dabei unabhängig voneinander einkanalig überwacht. Dies entspricht einem durchgehenden zweikanaligem System von Signaldetektoren SD1, SD2 und Sicherheitselektronik 50, wodurch eine wesentlich höhere Sicherheit erreicht werden kann.

Weitere Beispiele und Ausführungen der Verbindung zwischen der Sicherheitselektronik 50 und dem Detektionselement 40 sind möglich, welche sich durch eine Kombination von sicheren Eingängen E1+, E1-, ..., En+, En- mit einer ein- oder mehrkanaliger Überwachung ergeben. Die Wahl der Verbindung zwischen der Sicherheitselektronik 50 und dem Detektionselement 40 kann entsprechend der zu erreichenden beziehungsweise gewünschten SIL-/PL-Werte getroffen werden.

Die Überwachung der Meldeeinheit 30 und des Detektionselements 40 durch die Sicherheitselektronik 50 stellt somit eine Diagnosefunktion dar, welche erheblich zur Erhöhung der SIL-/PL-Werte beiträgt.

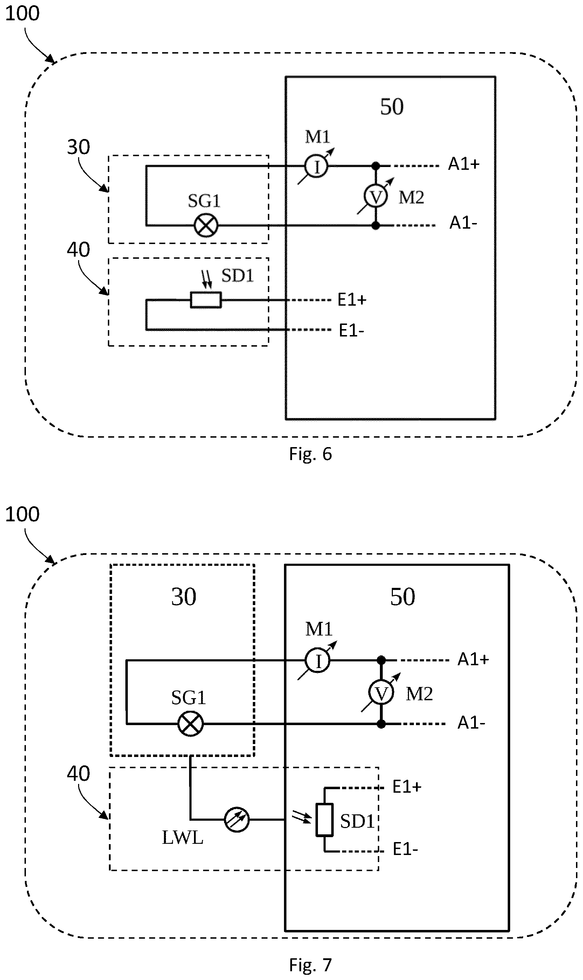

Fig. 6 ist eine schematische Darstellung eines Teils der Bedieneinheit 100, bei welcher die Verbindung zwischen Sicherheitselektronik 50 und Meldeeinheit 30 beziehungsweise Detektionselement 40 entsprechend einer ersten Ausführungsform veranschaulicht wird. In dieser Ausführungsform umfasst die Meldeeinheit 30 einen einzigen Signalgeber SG1, wobei der Signalgeber SG1 ein Leuchtmittel ist. Das Detektionselement 40 umfasst einen einzigen Signaldetektor SD1, wobei der Signaldetektor eine Fotodiode ist. Die Fotodiode detektiert ein Leuchten des Leuchtmittels. In einem weiteren Beispiel kann die Bedieneinheit 100 mehrere Signalgeber SGn und mehrere Signaldetektoren SDn beinhalten.

Der Signalgeber SG1 ist einkanalig über den sicheren Ausgang A1+, A1- mit der Sicherheitselektronik 50 verbunden. In diesem Beispiel überwacht die Sicherheitselektronik 50 mit einer ersten Messvorrichtung M1 den Strom und mit einer zweiten Messvorrichtung M2 die Spannung des Signalgebers SG1 am sicheren Ausgang A1+, A1-. Die erste Messvorrichtung M1 und die zweite Messvorrichtung M2 bilden dabei die Rückführung R1. Die Rückführung R1 kann neben dem Strom und/oder der Spannung beziehungsweise zusätzlich zum Strom und/oder der Spannung mindestens ein weiteres Signal beinhalten. Der Signaldetektor SD1 ist einkanalig über den sicheren Eingang E1+, E1- mit der Sicherheitselektronik 50 verbunden.

Wenn der Signalgeber SG1 einen von dem Funktionszustand, dem Gefahrenzustand und dem Positionszustand oder eine Änderung des Zustands als Leuchtinformation über die Sicherheitselektronik 50 ausgibt, wird diese Leuchtinformation von dem Signaldetektor SD1 detektiert und als Signal, umfassend Strom und/oder Spannung, an die Sicherheitselektronik 50 über den sicheren Eingang En+ En- zurückgegeben beziehungsweise rückgeführt. Durch diese Ausführung wird neben der sicheren Überwachung des Signals an den Signalgeber SG1 über den sicheren Ausgang A1+, A1- und der sicheren Überwachung des Signals von dem Signaldetektor SD1 über den sicheren Eingang E1+, E1- zusätzlich die Ausgabe des Signalgebers SG1 über den Signaldetektor SD1 und somit der Signalgeber SG1 selbst überwacht. Dadurch kann mit dem höchsten Sicherheitsniveau sichergestellt werden, dass der Signalgeber SG1 und somit die Meldeeinheit 30 den Zustand der Anlage 90 an den Bediener sicher ausgegeben hat beziehungsweise, dass die Meldeeinheit 30 sicher keine (falsche) Information an den Bediener ausgegeben hat. Da die Meldeeinheit 30 derart an der Bedieneinheit 100 angebracht ist, dass der Bediener den Signalgeber SG1 stets im Blickfeld hat, kann der Bediener die Zustandsänderung der Anlage 90 sofort wahrnehmen und bei Bedarf schnell reagieren. Insbesondere bei einer vorliegenden Gefahr, welche beispielsweise als rot-leuchtende Leuchtinformation durch den Signalgeber SG1 wiedergegeben wird, kann sich die Reaktionszeit deutlich verringern, wodurch eine gesamte Anlagensicherheit deutlich erhöht wird. Mit dieser Ausführung können somit die höchsten Sicherheitsniveaus und folglich die höchsten SIL-/PL-Werte erreicht werden.

Fig. 7 zeigt eine schematische Darstellung eines Teils der Bedieneinheit 100, bei welcher die Verbindung zwischen Sicherheitselektronik 50 und Detektionselement 40 entsprechend einer zweiten Ausführungsform ausgebildet ist. Der Aufbau der Bedieneinheit 100 entsprechend dem zweiten Ausführungsbeispiel unterscheidet sich zum Aufbau der Bedieneinheit 100 entsprechend dem ersten Ausführungsbeispiel in Fig. 6 nur dadurch, dass das Detektionselement 40 einen Lichtwellenleiter LWL und den Signaldetektor SD1 umfasst. Die Ausgabe der Meldeeinheit 30 als Leuchtinformation wird über den Lichtwellenleiter LWL an den Signaldetektor SD1 geleitet, wobei der Signaldetektor SD1 das Signal beziehungsweise die Ausgabe der Meldeeinheit 30 detektiert. Dadurch ist es möglich, den Signaldetektor SD1 an einer beliebigen Position an der Bedieneinheit 100 bereitzustellen, wodurch die Form und Größe der Bedieneinheit 100 individuell angepasst werden kann. Gleiche Komponenten sind mit gleichen Bezugszeichen gekennzeichnet und werden der Kürze halber nicht noch einmal im Detail beschrieben.

Der Signalgeber SG1 kann in einem ersten Beispiel einen Betriebszustand der Bedieneinheit 100 ausgeben. Wählt der Bediener über das zweite Bedienelement 6 oder den Touch-Screen der Anzeige 10 die Anlage 90 aus einer Vielzahl von Anlagen aus, kann der Signalgeber SG1 den Verbindungsaufbau und den Verbindungszustand ausgeben. Sind die Bedieneinheit 100 und die Anlage 90 verbunden, kann der Signalgeber SG1 den Funktionszustand, einen Gefahrenzustand oder einen Positionszustand der Anlage 90 ausgeben. Die Ausgabe des Signalgebers SG1 als Leuchtmittel erfolgt als Leuchtinformation, welche in einem nichtabschließenden Beispiel ein Blinken, Pulsieren und Ändern der Helligkeit und Farbe umfasst. Dadurch dient die Leuchtinformation als Indikator für bestimmte Zustände der Bedieneinheit 100 und/oder Anlage 90 und zum Erregen von Aufmerksamkeit. In einem Beispiel, wenn die Meldeeinheit 30 via Signalgeber SG1 einen Gefahrenzustand ausgibt, kann in Abhängigkeit der Gefahr der Bediener via Bedienelement 5 oder die Sicherheitselektronik 50 die Anlage 90 sicher außer Betrieb setzen. In einem anderen Beispiel, in dem der Bediener mit der Bedieneinheit 100 einen zuvor bestimmten örtlich zulässigen Bereich verlässt, kann die Meldeeinheit 30 via des Signalgebers SG1 durch eine Lichtinformation, beispielsweise ein Blinken, die Information ausgeben, dass der örtlich zulässige Bereich, beispielsweise für die Verbindung zwischen Bedieneinheit 100 und Anlage 90, verlassen wird. In einem weiteren Beispiel, in dem die Stromversorgung der Bedieneinheit 100 via Batterien erfolgt, kann der Signalgeber SG1 eine Leuchtinformation, angebend einen niedrigen Ladezustand der Batterie, ausgeben.

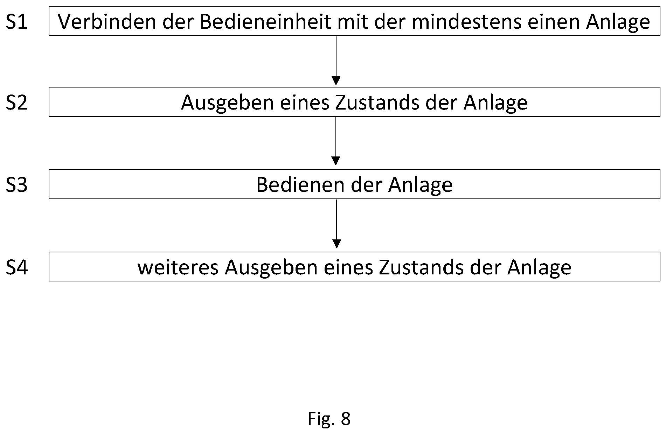

Fig. 8 zeigt ein Ablaufdiagramm eines Verfahrens zum Bedienen mindestens einer Anlage 90 aus einer Vielzahl von Anlagen mit der Bedieneinheit 100. In einem ersten Schritt S1 verbindet sich die Bedieneinheit 100 mit der mindestens einen Anlage 90 über den Kommunikationsanschluss 80 der Bedieneinheit 100. Die Anlage 90 kann beispielsweise eine vor dem Verbinden S1 durch den Bediener an der Bedieneinheit 100 via zweitem Bedienelement 6 oder Touch-Screen der Anzeige 10 ausgewählte Anlage oder eine bereits vorab in einem Speicher der Bedieneinheit 100 gespeicherte Anlage sein. Das Verbinden S1 erfolgt dabei über eine drahtgebundene (wired) oder drahtlose (wireless) Kommunikation. Wenn sich die Bedieneinheit 100 mit der Anlage 90 verbindet, erfolgt eine Kommunikation zwischen Bedieneinheit 100 und Anlage 90 in Echtzeit beziehungsweise in Intervallen im Millisekunden-Bereich. Dadurch kann sichergestellt werden, dass der Zustand der Anlage 90 in Echtzeit beziehungsweise mit einer kaum merkbaren Verzögerung durch die Meldeeinheit 30 in einem zweiten Schritt S2 sicher ausgegeben wird.

Das Ausgeben S2 des Zustands der Anlage 90 umfasst dabei einen von dem Funktionszustand, dem Gefahrenzustand und dem Positionszustand, welcher über die Meldeeinheit 30 der Bedieneinheit 100 als mindestens eine von der Leuchtinformation, Akustikinformation und Vibrationsinformation erfolgt. Das Ausgeben S2 des Zustands der Anlage 90 durch die Meldeeinheit 30 wird via der Sicherheitselektronik 50 über die Ansteuerung und die Rückführung R1, R2 des Signals an die Meldeeinheit 30 überwacht. Das Ausgeben S2 via der Sicherheitselektronik wird mit sicheren Ausgängen A1+, A1-, ..., An+, An-, mindestens einem Signalgeber SG1, ..., SGn, mindestens einem Signaldetektor SD1, ..., SDn und sicheren Eingängen E1+, E1-, ..., En+, En- überwacht. Ist keine Gefahr vorhanden und befindet sich der Bediener mit der Bedieneinheit 100 in dem örtlich zulässigen Bereich für die Verbindung, wird der Funktionszustand beispielsweise durch die Meldeeinheit 30 als Grün leuchtende Leuchtinformation und/oder ein akustisches Signal, angebend die einwandfreie Funktion und Verbindung zwischen Bedieneinheit 100 und Anlage 90, ausgegeben S2.

Der Bediener kann mit der Bedienung S3 der Anlage 90 via der Bedieneinheit 100 beginnen beziehungsweise fortfahren. Während der Bedienung S3 der Anlage 90 via der Bedieneinheit 100 folgt ein weiteres Ausgeben S4 des Zustands der Anlage 90. Das weitere Ausgeben S4 des Zustands der Anlage 90 umfasst wiederum einen von dem Funktionszustand, dem Gefahrenzustand und dem Positionszustand, welches über die Meldeeinheit 30 als mindestens eines von der Leuchtinformation, Akustikinformation und Vibrationsinformation erfolgt. Das weitere Ausgeben S4 wird während der Verbindung beziehungsweise der Kommunikation zwischen Bedieneinheit 100 und Anlage 90 in Echtzeit beziehungsweise in Intervallen im Millisekunden-Bereich ununterbrochen wiederholt. Dadurch wird sichergestellt, dass der Zustand der Anlage 90 in Echtzeit beziehungsweise mit einer kaum merkbaren Verzögerung durch die Meldeeinheit 30, welche über die Sicherheitselektronik 50 der Bedieneinheit 100 überwacht wird, durch das weitere Ausgeben S4 sicher ausgegeben wird.

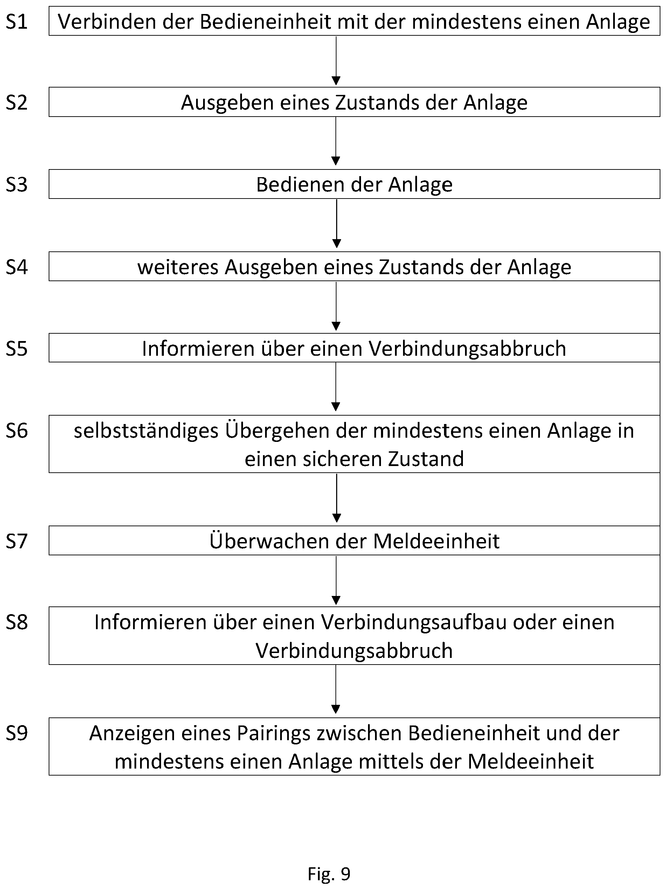

Wie in Fig. 9 zu sehen, umfasst das Verfahren zum Bedienen mindestens einer Anlage 90 aus einer Vielzahl von Anlagen mit der Bedieneinheit 100 ferner ein Informieren S5 über einen Verbindungsabbruch der Bedieneinheit 100 mit der mindestens einen Anlage 90 via der Meldeeinheit 30 der Bedieneinheit 100. Die Meldeeinheit 30 informiert S5 über den Verbindungsabbruch mit einem Signal, welches unterschiedlich von einem Signal wiedergebend den Funktionszustand, den Gefahrenzustand und den Positionszustand der Anlage 90 ist.

Ein Verbindungsabbruch kommt zustande, wenn der Kommunikationsanschluss 80 die Verbindung/Kommunikation mit der zuvor verbundenen Anlage 90 verliert. Gründe für den Verbindungsabbruch können beispielsweise das Verlassen eines örtlich zulässigen Bereichs durch den Bediener mit der Bedieneinheit 100 oder ein niedriger Ladezustand der Batterie beziehungsweise ein Stromversorgungsabbruch der Anlage 90 oder Bedieneinheit 100 sein. Kommt es zu dem Verbindungsabbruch der Anlage 90 mit der Bedieneinheit 100, geht die Anlage 90 selbstständig in einen sicheren Zustand über S6. Das selbstständige Übergehen S6 der Anlage in den sicheren Zustand und das Informieren S5 erfolgen im Wesentlichen gleichzeitig.

Das Verfahren umfasst ferner ein Überwachen S7 der Meldeeinheit 30 über den sicheren Ausgang A1+, A1-, ..., An+, An- der Sicherheitselektronik 50 der Bedieneinheit 100. Durch das Überwachen S7 der Meldeeinheit 30 kann ein hoher Sicherheitsstandard - hoher SIL beziehungsweise PL - erreicht werden.

Entsprechend der Wahl der Anlage 90 aus der Vielzahl von Anlagen (90) kann die Bedieneinheit 100 für mindestens eine Anlage 90 aus der Vielzahl von Anlagen verwendet werden. In einem Beispiel kann die Bedieneinheit 100 in einer Fertigungsumgebung, wie beispielsweise einer Fertigungshalle, mehrere Anlagen bedienen.

### Bezugszeichenliste

- 100: Bedieneinheit
- 5, 6: Bedienelement
- 10: Anzeige
- 30: Meldeeinheit
- 40: Detektionselement
- 50: Sicherheitselektronik
- 80: Kommunikationsanschluss
- 90: Anlage
- A1+, A1-, ..., An+, An-: sichere/r Ausgang/Ausgänge
- E1+, E1-, ..., En+, En-: sichere/r Eingang/Eingänge
- K1, K2: Kanal
- M1, M2: Messmittel
- R1, R2: Rückführungen
- S1, S2: Schalter
- SD1, ..., SDn: Signaldetektor(en)
- SG1, ..., SGn: Signalgeber

## Patentansprüche

1. Bedieneinheit (100) zum Bedienen von mindestens einer Anlage (90) aus einer Vielzahl von Anlagen (90), die Bedieneinheit (100) umfassend:
einen Kommunikationsanschluss (80) zum Verbinden der Bedieneinheit (100) mit der mindestens einen Anlage (90);
eine Meldeeinheit (30) zum Ausgeben und zum ununterbrochenen wiederholten weiteren Ausgeben eines Zustands der mindestens einen Anlage (90), wobei die Meldeeinheit (30) bereitgestellt ist an der Bedieneinheit (100); und
eine Sicherheitselektronik (50) zum Überwachen der Meldeeinheit (30) beim Ausgeben des Zustands der mindestens einen Anlage (90), umfassend mindestens einen sicheren Eingang (E1+, E1-, ..., En+, En-) und mindestens einen sicheren Ausgang (A1+, A1-, ..., An+, An-), wobei die Sicherheitselektronik (50) mit der Meldeeinheit (30) über den mindestens einen sicheren Ausgang (A1+, A1-, ..., An+, An-) verbunden ist und die Sicherheitselektronik (50) mit einem Detektionselement (40) über den mindestens einen sicheren Eingang (E1+, E1-, ..., En+, En-) verbunden ist, wobei
das Detektionselement (40) eingerichtet ist, eine Ausgabe der Meldeeinheit (30) zu detektieren, und wobei
der Zustand mindestens einen von einem Funktionszustand, einem Gefahrenzustand und einem Positionszustand umfasst.

2. Bedieneinheit (100) nach Anspruch 1, bei welcher
die Sicherheitselektronik (50) mit dem sicheren Ausgang (A1+, A1-, ..., An+, An-) über eine Rückführung (R1, R2) einkanalig oder mehrkanalig mit der Meldeeinheit (30) verbunden ist und die Sicherheitselektronik (50) mit dem sicheren Eingang (E1+, E1-, ..., En+, En-) einkanalig oder mehrkanalig mit dem Detektionselement (40) verbunden ist.

3. Bedieneinheit (100) nach Anspruch 1 oder 2, bei welcher
die Meldeeinheit (30) mindestens einen Signalgeber (SG1, ..., SGn) umfasst.

4. Bedieneinheit (100) nach Anspruch 3, bei welcher
jeder von dem mindestens einem Signalgeber (SG1, ..., SGn) über jeweils mindestens einen sicheren Ausgang (A1+, A1-, ..., An+, An-) mit der Sicherheitselektronik (50) verbunden ist.

5. Bedieneinheit (100) nach Anspruch 3 oder 4, bei welcher
der mindestens eine Signalgeber (SG1, ..., SGn) mindestens eines von einem Leuchtmittel (SG1, ..., SGn), einem Akustikgeber (SG1, ..., SGn) und einem Vibrationsgeber (SG1, ..., SGn) umfasst.

6. Bedieneinheit (100) nach Anspruch 5, bei welcher
das Leuchtmittel ein einzelnes Leuchtmittel oder ein kombiniertes Leuchtmittel umfasst.

7. Bedieneinheit (100) nach einem der Ansprüche 3 bis 6, bei welcher
die Meldeeinheit (30) den Funktionszustand, den Gefahrenzustand und den Positionszustand der mindestens einen Anlage (90) mit einer von einer Leuchtinformation, Akustikinformation und Vibrationsinformation ausgibt.

8. Bedieneinheit (100) nach einem der vorherigen Ansprüche, bei welcher
das Detektionselement (40) mindestens einen Signaldetektor (SD1, ..., SDn) umfasst, und
die Anzahl der Signaldetektoren (SD1, ..., SDn) von der Anzahl der Signalgeber (SG1, ..., SGn) abweichen kann.

9. Bedieneinheit (100) nach Anspruche 8, bei welcher
der mindestens eine Signaldetektor (SD1, ..., SDn) mindestens eines von einem Fotowiderstand (SD1, ..., SDn), einer Fotodiode (SD1, ..., SDn), einem Fototransistor (SD1, ..., SDn), einem Akustiksensor (SD1, ..., SDn) und einem Vibrationssensor (SD1, ..., SDn) umfasst.

10. Bedieneinheit (100) nach Anspruch 8 oder 9, bei welcher
jeder Signaldetektor (SD1, ..., SDn) über jeweils mindestens einen sicheren Eingang (E1+, E1-, ..., En+, En-) mit der Sicherheitselektronik (50) verbunden ist.

11. Bedieneinheit (100) nach einem der vorherigen Ansprüche, bei welcher
die Bedieneinheit (100) eine von der mindestens einen Anlage (90) unabhängige Komponente oder ein Teil der Anlage (90) sein kann.

12. Bedieneinheit (100) nach einem der vorherigen Ansprüche, bei welcher
der Kommunikationsanschluss (80) drahtlos oder drahtgebunden mit der mindestens einen Anlage (90) kommuniziert.

13. Bedieneinheit (100) nach einem der vorherigen Ansprüche, ferner umfassend:
mindestens ein Bedienelement (5; 6), eingerichtet, um die Bedieneinheit (100) zu bedienen; und
eine Anzeige (10), eingerichtet, um Information/en über einen Status der mindestens einen Anlage (90) und Information/en über einen Status der Bedieneinheit (100) anzuzeigen.

14. Verfahren zum Bedienen mindestens einer Anlage (90) aus einer Vielzahl von Anlagen (90) mit einer Bedieneinheit (100) nach einem der vorherigen Ansprüche, das Verfahren umfassend:
Verbinden (S1) der Bedieneinheit (100) mit der mindestens einen Anlage (90) über einen Kommunikationsanschluss (80) der Bedieneinheit (100);
Ausgeben (S2) eines Zustands der mindestens einen Anlage (90), umfassend einen von einem Funktionszustand, einem Gefahrenzustand und einem Positionszustand, über eine Meldeeinheit (30) der Bedieneinheit (100) als mindestens eines von einer Leuchtinformation, Akustikinformation und Vibrationsinformation;
Bedienen (S3) der mindestens einen Anlage (90) via der Bedieneinheit (100); und
weiteres Ausgeben (S4) eines Zustands der mindestens einen Anlage (90), umfassend einen von dem Funktionszustand, dem Gefahrenzustand und dem Positionszustand, über die Meldeeinheit (30) als mindestens eines von der Leuchtinformation, Akustikinformation und Vibrationsinformation;
wobei
das weitere Ausgeben (S4) während der Verbindung zwischen Bedieneinheit (100) und der mindestens einen Anlage (90) ununterbrochen wiederholt wird, und
wobei beim weiteren Ausgeben (S4) die Meldeeinheit (30) über eine Sicherheitselektronik (50) der Bedieneinheit (100) überwacht wird, wobei die Sicherheitselektronik (50) einen sicheren Eingang (E1+, E1-, ..., En+, En-) und einen sicheren Ausgang (A1+, A1-, ..., An+, An-) umfasst und die Meldeeinheit (30) mit der Sicherheitselektronik (50) über den mindestens einen sicheren Ausgang (A1+, A1-, ..., An+, An-) verbunden ist.

15. Verfahren nach Anspruch 14, ferner umfassend:
Informieren (S5) über einen Verbindungsabbruch der Bedieneinheit (100) mit der mindestens einen Anlage (90) via der Meldeeinheit (30) der Bedieneinheit (100), und
selbstständiges Übergehen (S6) der mindestens einen Anlage (90) in einen sicheren Zustand bei Verbindungsabbruch der mindestens einen Anlage (90) mit der Bedieneinheit (100),
wobei das Informieren (S5) mit einem Signal, unterschiedlich von einem Signal wiedergebend den Funktionszustand, den Gefahrenzustand und den Positionszustand der mindestens einen Anlage (90), erfolgt.

16. Verfahren nach Anspruch 14 oder 15, bei welchem
das Verbinden (S1) über eine drahtgebundene oder drahtlose Kommunikation erfolgt.

17. Verfahren nach einem der Ansprüche 14 bis 16, bei welchem
das Ausgeben (S2) via der Sicherheitselektronik (50) über eine Ansteuerung und eine Rückführung (R1, R2) eines Signals an die Meldeeinheit (30) überwacht wird.

18. Verfahren nach einem der Ansprüche 14 bis 17, bei welchem
das Ausgeben (S2) eine Information umfasst, welche ein Verlassen der Bedieneinheit (100) eines örtlich zulässigen Bereichs für die Verbindung zwischen Bedieneinheit (100) und Anlage (90) umfasst.

19. Verfahren nach einem der Ansprüche 14 bis 18, ferner umfassend:
Überwachen (S7) der Meldeeinheit (30) über den sicheren Ausgang (A1+, A1-, ..., An+, An-) der Sicherheitselektronik (50) der Bedieneinheit (100).

20. Verfahren nach einem der Ansprüche 14 bis 19, ferner umfassend:
Informieren (S8) über einen Verbindungsaufbau oder einen Verbindungsabbruch zwischen Bedieneinheit (100) und der mindestens einen Anlage (90) mittels der Meldeeinheit (30).

21. Verfahren nach einem der Ansprüche 14 bis 20, ferner umfassend:
Anzeigen (S9) eines Pairings zwischen Bedieneinheit (100) und der mindestens einen Anlage (90) mittels der Meldeeinheit (30).

22. Verwenden der Bedieneinheit (100) nach einem der Ansprüche 1 bis 13 für mindestens eine Anlage (90) aus einer Vielzahl von Anlagen (90).

## Claims

1. An operating unit (100) for operating at least one system (90) from a plurality of systems (90), the operating unit (100) comprising:
a communication port (80) for connecting the operating unit (100) to the at least one system (90);
a reporting unit (30) for outputting and for continuously and repeatedly outputting a state of the at least one system (90), wherein the reporting unit (30) is provided at the operating unit (100); and
a safety electronic (50) for monitoring the reporting unit (30) when outputting the state of the at least one system (90), comprising at least one safe input (E1+, E1-, ..., En+, En-) and at least one safe output (A1+, A1-, ..., An+, An-), wherein the safety electronic (50) is connected to the reporting unit (30) via the at least one safe output (A1+, A1-, ..., An+, An-) and the safety electronic (50) is connected to a detection element (40) via the at least one safe input (E1+, E1-, ..., En+, En-), wherein
the detection element (40) is configured to detect an output of the reporting unit (30), and wherein
the state comprises at least one of a functional state, a danger state and a position state.

2. The operating unit (100) according to claim 1, wherein
the safety electronic (50) is connected to the reporting unit (30) with the safe output (A1+, A1-, ..., An+, An-) via a feedback (R1, R2) in a single-channel or multi-channel manner and the safety electronic (50) is connected to the detection element (40) with the safe input (E1+, E1-, ..., En+, En-) in a single-channel or multi-channel manner.

3. The operating unit (100) according to claim 1 or 2, wherein
the reporting unit (30) comprises at least one signal transmitter (SG1, ..., SGn).

4. The operating unit (100) according to claim 3, wherein
each of the at least one signal transmitter (SG1, ..., SGn) is connected to the safety electronic (50) via at least one safe output (A1+, A1-, ..., An+, An-).

5. The operating unit (100) according to claim 3 or 4, wherein
the at least one signal transmitter (SG1, ..., SGn) comprises at least one of a lighting means (SG1, ..., SGn), an acoustic transmitter (SG1, ..., SGn) and a vibration transmitter (SG1, ..., SGn).

6. The operating unit (100) according to claim 5, wherein
the lighting means comprises a single lighting means or a combined lighting means.

7. The operating unit (100) according to any one of claims 3 to 6, wherein
the reporting unit (30) outputs the functional state, the danger state and the position state of the at least one system (90) with one of lighting information, acoustic information and vibration information.

8. The operating unit (100) according to any one of the previous claims, wherein
the detection element (40) comprises at least one signal detector (SD1, ..., SDn), and
the number of signal detectors (SD1, ..., SDn) can differ from the number of signal transmitters (SG1, ..., SGn).

9. The operating unit (100) according to claim 8, wherein
the at least one signal detector (SD1, ..., SDn) comprises at least one of a photoresistor (SD1, ..., SDn), a photodiode (SD1, ..., SDn), a phototransistor (SD1, ..., SDn), an acoustic sensor (SD1, ..., SDn) and a vibration sensor (SD1, ..., SDn).

10. The operating unit (100) according to claim 8 or 9, wherein
each signal detector (SD1, ..., SDn) is connected to the safety electronic (50) via at least one safe input (E1+, E1-, ..., En+, En-).

11. The operating unit (100) according to any one of the previous claims, wherein
the operating unit (100) can be a component independent of the at least one system (90) or a part of the system (90).

12. The operating unit (100) according to any one of the previous claims, wherein
the communication port (80) communicates wirelessly or by wire with the at least one system (90).

13. The operating unit (100) according to any one of the previous claims, further comprising:
at least one operating element (5; 6) configured to operate the operating unit (100); and
a display (10) configured to display information about a status of the at least one system (90) and information about a status of the operating unit (100).

14. A method for operating at least one system (90) from a plurality of systems (90) with an operating unit (100) according to any one of the previous claims, the method comprising:
connecting (S1) the operating unit (100) to the at least one system (90) via a communication port (80) of the operating unit (100);
outputting (S2) a state of the at least one system (90) comprising one of a functional state, a danger state and a position state via a reporting unit (30) of the operating unit (100) as at least one of lighting information, acoustic information and vibration information;
operating (S3) the at least one system (90) via the operating unit (100); and
further outputting (S4) a state of the at least one system (90) comprising one of the functional state, the danger state and the position state via the reporting unit (30) as at least one of the lighting information, acoustic information and vibration information;
wherein
the further outputting (S4) is continuously repeated during the connection between the operating unit (100) and the at least one system (90), and
wherein during the further outputting (S4) the reporting unit (30) is monitored via a safety electronic (50) of the operating unit (100), wherein the safety electronic (50) comprises a safe input (E1+, E1-, ..., En+, En-) and a safe output (A1+, A1-, ..., An+, An-) and the reporting unit (30) is connected to the safety electronic (50) via the at least one safe output (A1+, A1-, ..., An+, An-).

15. The method according to claim 14, further comprising:
informing (S5) about a connection termination of the operating unit (100) to the at least one system (90) via the reporting unit (30) of the operating unit (100), and
automatically transitioning (S6) the at least one system (90) into a safe state upon connection termination of the at least one system (90) to the operating unit (100),
wherein the informing (S5) is performed with a signal different from a signal representing the functional state, the danger state and the position state of the at least one system (90).

16. The method according to claim 14 or 15, wherein
the connecting (S1) is performed via a wired or wireless communication.

17. The method according to any one of claims 14 to 16, wherein
the outputting (S2) is monitored via the safety electronic (50) via a control and a feedback (R1, R2) of a signal to the reporting unit (30).

18. The method according to any one of claims 14 to 17, wherein
the outputting (S2) comprises information comprising leaving the operating unit (100) of a locally permissible range for the connection between the operating unit (100) and the system (90).

19. The method according to any one of claims 14 to 18, further comprising:
monitoring (S7) the reporting unit (30) via the safe output (A1+, A1-, ..., An+, An-) of the safety electronic (50) of the operating unit (100).

20. The method according to any one of claims 14 to 19, further comprising:
informing (S8) about a connection setup or a connection termination between the operating unit (100) and the at least one system (90) by means of the reporting unit (30).

21. The method according to any one of claims 14 to 20, further comprising:
displaying (S9) a pairing between the operating unit (100) and the at least one system (90) by means of the reporting unit (30).

22. Using the operating unit (100) according to any one of claims 1 to 13 for at least one system (90) from a plurality of systems (90).

## Revendications

1. Unité de commande (100) pour commander au moins une installation (90) parmi une pluralité d'installations (90), l'unité de commande (100) comprenant :
un port de communication (80) pour relier l'unité de commande (100) à l'au moins une installation (90) ;
une unité de signalisation (30) pour émission et pour émission supplémentaire de manière répétée et ininterrompue un état de l'au moins une installation (90), l'unité de signalisation (30) étant prévue sur l'unité de commande (100) ; et
une électronique de sécurité (50) pour surveiller l'unité de signalisation (30) lors de l'émission de l'état de l'au moins une installation (90), comprenant au moins une entrée sécurisée (E1+, E1-, ..., En+, En-) et au moins une sortie sécurisée (A1+, A1-, ..., An+, An-), dans laquelle l'électronique de sécurité (50) est reliée à l'unité de signalisation (30) par l'intermédiaire de l'au moins une sortie sécurisée (A1+, A1-, ..., An+, An-) et l'électronique de sécurité (50) est reliée à un élément de détection (40) par l'intermédiaire de l'au moins une entrée sécurisée (E1+, E1-, ..., En+, En-), dans laquelle
l'élément de détection (40) est conçu pour détecter une émission de l'unité de signalisation (30), et
dans laquelle l'état comprend au moins l'un d'un état de fonctionnement, d'un état de danger et d'un état de position.

2. Unité de commande (100) selon la revendication 1, dans laquelle
l'électronique de sécurité (50) est reliée à l'unité de signalisation (30) avec la sortie sécurisée (A1+, A1-, ..., An+, An-) par l'intermédiaire d'un retour (R1, R2) par un canal ou plusieurs canaux et l'électronique de sécurité (50) est reliée à l'élément de détection (40) avec l'entrée sécurisée (E1+, E1-, ..., En+, En-) par un canal ou plusieurs canaux.

3. Unité de commande (100) selon la revendication 1 ou 2, dans laquelle
l'unité de signalisation (30) comprend au moins un générateur de signal (SG1, ..., SGn).

4. Unité de commande (100) selon la revendication 3, dans laquelle chacun de l'au moins un générateur de signal (SG1, ..., SGn) est relié à l'électronique de sécurité (50) par l'intermédiaire de respectivement au moins une sortie sécurisée (A1+, A1-, ..., An+, An-).

5. Unité de commande (100) selon la revendication 3 ou 4, dans laquelle
l'au moins un générateur de signal (SG1, ..., SGn) comprend au moins l'un parmi un moyen d'éclairage (SG1, ..., SGn), un générateur acoustique (SG1, ..., SGn) et un générateur de vibration (SG1, ..., SGn).

6. Unité de commande (100) selon la revendication 5, dans laquelle
le moyen d'éclairage comprend un moyen d'éclairage individuel ou un moyen d'éclairage combiné.

7. Unité de commande (100) selon l'une des revendications 3 à 6, dans laquelle
l'unité de signalisation (30) émet l'état de fonctionnement, l'état de danger et l'état de position de l'au moins une installation (90) avec l'une parmi une information d'éclairage, une information acoustique et une information de vibrations.

8. Unité de commande (100) selon l'une des revendications précédentes, dans laquelle
l'élément de détection (40) comprend au moins un détecteur de signal (SD1, ..., SDn), et
le nombre de détecteurs de signal (SD1, ..., SDn) peut s'écarter du nombre de générateurs de signal (SG1, ..., SGn).

9. Unité de commande (100) selon la revendication 8, dans laquelle
l'au moins un détecteur de signal (SD1, ..., SDn) comprend au moins l'un parmi une photorésistance (SD1, ..., SDn), une photodiode (SD1, ..., SDn), un phototransistor (SD1, ..., SDn), un capteur acoustique (SD1, ..., SDn) et un capteur de vibration (SD1, ..., SDn).

10. Unité de commande (100) selon la revendication 8 ou 9, dans laquelle
chaque détecteur de signal (SD1, ..., SDn) est relié à l'électronique de sécurité (50) par l'intermédiaire de respectivement au moins une entrée sécurisée (E1+, E1-, ..., En+, En-).

11. Unité de commande (100) selon l'une des revendications précédentes, dans laquelle
l'unité de commande (100) peut être un composant indépendant de l'au moins une installation (90) ou une partie de l'installation (90).

12. Unité de commande (100) selon l'une des revendications précédentes, dans laquelle
le port de communication (80) communique sans fil ou par fil avec l'au moins une installation (90).

13. Unité de commande (100) selon l'une des revendications précédentes, comprenant en outre :
au moins un élément de commande (5 ; 6) conçu pour commander l'unité de commande (100) ; et
un affichage (10) conçu pour afficher une ou des informations sur un état de l'au moins une installation (90) et une ou des informations sur un état de l'unité de commande (100).

14. Procédé de commande d'au moins une installation (90) parmi une pluralité d'installations (90) avec une unité de commande (100) selon l'une des revendications précédentes, le procédé comprenant :
liaison (S1) de l'unité de commande (100) à l'au moins une installation (90) par l'intermédiaire d'un port de communication (80) de l'unité de commande (100) ;
émission (S2) d'un état de l'au moins une installation (90), comprenant l'un parmi un état de fonctionnement, un état de danger et un état de position, par l'intermédiaire d'une unité de signalisation (30) de l'unité de commande (100) en tant qu'au moins l'une parmi une information d'éclairage, une information acoustique et une information de vibrations ;
commande (S3) de l'au moins une installation (90) par l'intermédiaire de l'unité de commande (100) ; et
émission supplémentaire (S4) d'un état de l'au moins une installation (90), comprenant l'un parmi l'état de fonctionnement, l'état de danger et l'état de position, par l'intermédiaire de l'unité de signalisation (30) en tant qu'au moins l'une parmi l'information d'éclairage, l'information acoustique et l'information de vibrations ;
dans lequel
l'émission supplémentaire (S4) est répétée de manière ininterrompue pendant la liaison entre l'unité de commande (100) et l'au moins une installation (90), et
dans lequel, lors de l'émission supplémentaire (S4), l'unité de signalisation (30) est surveillée par l'intermédiaire d'une électronique de sécurité (50) de l'unité de commande (100), l'électronique de sécurité (50) comprenant une entrée sécurisée (E1+, E1-, ..., En+, En-) et une sortie sécurisée (A1+, A1-, ..., An+, An-) et l'unité de signalisation (30) est reliée à l'électronique de sécurité (50) par l'intermédiaire de l'au moins une sortie sécurisée (A1+, A1-, ..., An+, An-).

15. Procédé selon la revendication 14, comprenant en outre :
information (S5) d'une interruption de liaison de l'unité de commande (100) avec l'au moins une installation (90) par l'intermédiaire de l'unité de signalisation (30) de l'unité de commande (100), et
passage (S6) de manière autonome de l'au moins une installation (90) dans un état sécurisé lors de l'interruption de liaison de l'au moins une installation (90) avec l'unité de commande (100),
dans lequel l'information (S5) est effectuée avec un signal, différent d'un signal représentant l'état de fonctionnement, l'état de danger et l'état de position de l'au moins une installation (90).

16. Procédé selon la revendication 14 ou 15, dans lequel
la liaison (S1) est effectuée par l'intermédiaire d'une communication avec fil ou sans fil.

17. Procédé selon l'une des revendications 14 à 16, dans lequel
l'émission (S2) par l'intermédiaire de l'électronique de sécurité (50) est surveillée par l'intermédiaire d'une commande et d'un retour (R1, R2) d'un signal à l'unité de signalisation (30).

18. Procédé selon l'une des revendications 14 à 17, dans lequel
l'émission (S2) comprend une information qui comprend une sortie de/par l'unité de commande (100) d'une zone localement admissible pour la liaison entre l'unité de commande (100) et l'installation (90).

19. Procédé selon l'une des revendications 14 à 18, comprenant en outre :
surveillance (S7) de l'unité de signalisation (30) par l'intermédiaire de la sortie sécurisée (A1+, A1-, ..., An+, An-) de l'électronique de sécurité (50) de l'unité de commande (100).

20. Procédé selon l'une des revendications 14 à 19, comprenant en outre :
information (S8) d'un établissement de liaison ou d'une interruption de liaison entre l'unité de commande (100) et l'au moins une installation (90) au moyen de l'unité de signalisation (30).

21. Procédé selon l'une des revendications 14 à 20, comprenant en outre :
affichage (S9) d'un appairage entre l'unité de commande (100) et l'au moins une installation (90) au moyen de l'unité de signalisation (30).

22. Utilisation de l'unité de commande (100) selon l'une des revendications 1 à 13 pour au moins une installation (90) parmi une pluralité d'installations (90).
